# EUROPEAN PATENT APPLICATION

(11) **EP 1 358 796 A1**
(43) Date of publication of application: **05.11.2003**
(21) Application number: 03252770.7
(22) Date of filing: 01.05.2003
(51) Int. Cl.: A01K 95/02, A01K 91/047

(54) **Fishing accesory**

(30) Priority: 02.05.2002 GB 0210107
(71) Applicant: Walkers One Stop Tackle Shop Ltd., Stoke-on-Trent, Staffordshire ST6 6LE (GB)
(72) Inventor: Walker, Anthony Arnold, Stoke-on-Trent, Staffordshire ST6 6LE (GB)
(74) Representative: Sales, Robert Reginald

(57) **Abstract**

A fishing accessory 10 for mounting a weight 12 on a fishing line 14. The accessory 10 comprising a hollow body 16 with a resilient finger 26 extending parallel to the cylindrical section 18, such that a weight 12 can be mounted thereto by deforming the finger 26 to enable a swivel loop to pass therearound and be moved to a locating space 30. The accessory 10 also comprises a closable body in which a recess 34 is provided which can rotatably locate a swivel (52) joining two pieces of fishing line (62).

## Description

This invention concerns a fishing accessory, and particularly but not exclusively a fishing accessory for mounting a weight on a fishing line.

When fishing using weights problems can be encountered if once a fish is hooked the weight or another part of the line becomes caught for instance on weeds. In such a scenario it is highly desirable for the weight to be able to be pulled off, whilst the fish remains firmly hooked on the line. If the fish were to break the line whilst remaining attached to the weight this will probably result in the fish's death.

According to the present invention there is provided a fishing accessory, the accessory including a first mounting part to which a weight can be mounted, and a second mounting part which can locate a line connecting member for connecting two lengths of fishing line, the second mounting part being selectively movable between a first condition in which the connecting member is restrainably located, and a second position in which the connecting member can be located on the second mounting part or removed therefrom.

The first mounting part is preferably arranged such that a weight can be pulled thereof in one direction, and may be arranged that said mounting part has to be resiliently deformed for a weight to be pulled off in said one direction.

The accessory may include a body which provides the first and second mounting parts. The first mounting part may comprise a projection member extending from the body in a generally parallel alignment thereto. The projection member extend upwardly in normal use and may include a locating part towards the closed end of the projection member where a weight or mounting part for a weight can freely locate. The free end of the projection member may be arranged so as to require resilient deformation to permit a weight or a mounting part for a weight to pass thereby, when moving to or from the locating part.

A resilient sleeve may be provided selectively locatable over the part of the body which includes the first mounting part.

The body may include a longitudinal passage through which a fishing line can extend.

The second mounting part preferably comprises a main recess defining means which can accept the line connecting member, and a closure for the main recess. The closure may be pivotally mounted relative to the main recess, and sprung detent means may be provided for retaining the closure in a closed position. The detent means may be provided on the closure with a corresponding opening in the main recess defining means, or vice versa.

The main recess defining means may be configured to hold a line connecting means in the form of a swivel. The recess defining means may also define a mounting recess for receiving a portion of a swivel to the side of a central section, such that the central section and hence whole of the swivel is restrained in the main recess. A pair of mounting recesses may be provided for respectively receiving portions of the swivel either side of the central section.

Embodiments of the present invention will now be described by way of example only and with reference to the accompanying drawings, in which:-
Fig. 1 is a diagrammatic side view of a first fishing accessory according to the invention in an open condition;
Fig. 2 is an end view of the assembly of Fig. 1 from the left hand end as shown;
Fig. 3 is an end view of the assembly of Fig. 1 from the right hand end as shown;
Fig. 4 is a diagrammatic sectional view of parts of the assembly of Fig. 1 at the line X-X;
Fig. 5 is a diagrammatic view of a fishing line incorporating the accessory of Fig. 1; and
Figs. 6 - 8 are respectively similar views to Figs. 1 - 3 of a second fishing accessory according to the invention.

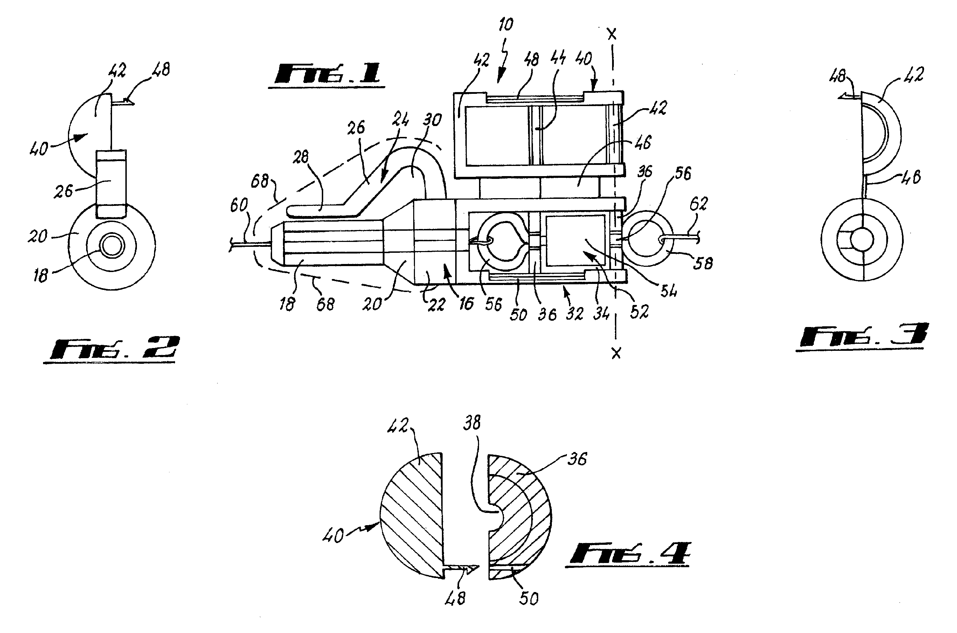

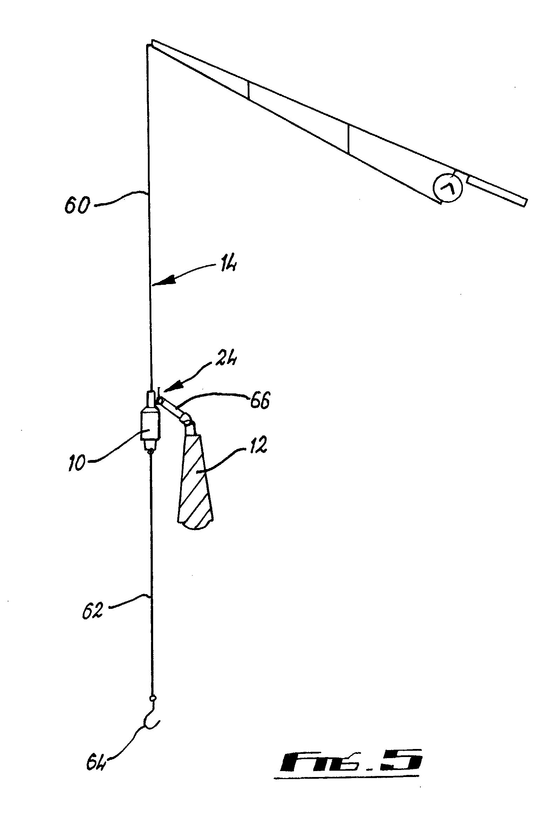

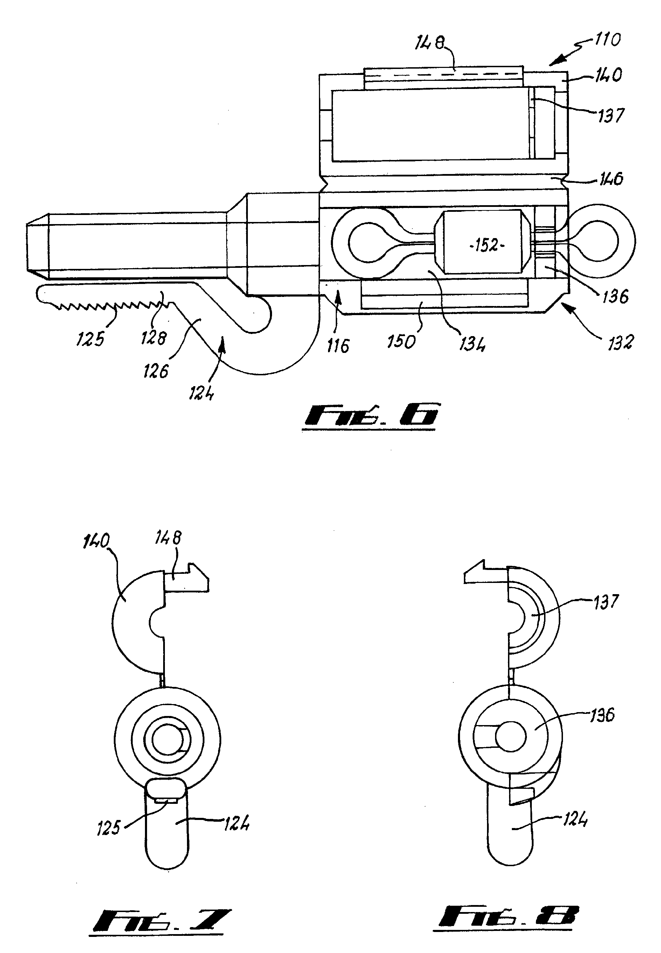

Figs. 1 to 5 of the drawings show a fishing accessory 10 for mounting a weight 12 on a fishing line 14. The accessory 10 comprises a body 16 made of plastics material. The body 16 comprises a first part on the left hand side as shown in Fig. 1 which comprises a first hollow cylindrical section 18 with a frusto conical section 20 leading to a broader cylindrical section 22. A first mounting part 24 is mounted on the section 22 to extend almost to the free end of the section 18. The mounting part 24 comprises a resilient finger 26 which initially extends radially outwardly and then bends downwardly and to the left as shown in Fig. 1 to provide an end part 28 substantially parallel to the section 18 and closely spaced therefrom. A locating space 30 is defined between the finger 26 and the section 20 and adjacent parts of the section 18 and 22.

The body 16 also comprises a second mounting part 32. The part 32 comprises means defining a main recess 34 of generally hollow configuration. Two webs 36 extend across the recess and are provided each with a small central mounting recess 38. The second mounting part also comprises a closure 40 of generally hollow semi-circular cross-section with end members 42 one of which is engageable against the right hand end web 36, and a central web 44 which is engageable against the other web 36. The closure 40 is mounted to the body 16 defining the main recess 34 by a hinge 46. A resilient detent 48 extends from the free side of the closure 40 and is selectively engageable through an opening 50 inside of the body defining the main recess 34 away from the hinge 46.

In use, with the closure 40 open, a swivel 52 can be located therein with the central part 54 of the swivel 52 locating between the webs 36 and the connections 56 between the end loops 58 and the part 54 locating in the mounting recesses 38. The left most end loop 58 as shown connects to the main fishing line 60 which extends through the hollow body 16. The other loop 58 mounts a fishing line 62 of a required length, and which mounts a hook 64.

A weight 12 can be fitted over the finger 26 by moving the finger 26 away from the section 18. The weight 12 would usually be mounted on a swivel 66, with one end loop of the swivel 66 mounting the weight 12 and the other locatable around the finger 26. Once the loop of the swivel 66 has passed the end part 18 of the finger 16 it can locate freely in the locating space 30 and the finger 26 can return to a relaxed position, retaining the swivel 66 in the locating space 30.

A resilient sleeve 68 shown in dotted lines in Fig. 1 would normally be provided around the line 60 and can be slid over the end part 28 of the finger 26 once the swivel loop is in the locating space 30. The swivel 52 connecting the fishing lines 60, 62 is located in the recess 34 as described, and the closure 40 is closed and held closed by the detent 48.

The fishing accessory 10 can be used in a usual manner. If for instance the weight 12 were to become stuck for instance in weed, and particularly after a fish has bitten, if a sufficient force is applied thereto the weight 12 will cause the finger 26 to deform such that the swivel loop will pass out of the locating part 30 and past the sleeve 68 disconnect the weight 12 from the finger 26. This will prevent the line breaking and particularly leaving a fish on a broken line with a weight attached. The body 16 provides a secure mounting for the swivel 52 which will thus not be pulled out if the weight 12 becomes stuck, as may have happened previously. There is thus a described an advantageous fishing accessory providing secure mounting of the swivel but enabling release of the weight if required.

Figs. 6 - 8 show a second fishing accessory 110. The accessory 110 is similar to the accessory 10 and usable in a similar manner. Accordingly, only the significant differences between the accessories 10 and 110 will now be described.

The accessory 110 again comprises a body 116 with a first part. In this instance the mounting part 124 is provided on an opposite side of the body 16 to a hinge 146 for mounting the closure 140 on the body 116. A plurality of serrations 125 are provided on the outside of the end part 128 of the finger 126. The serrations 125 can help to provide engagement with a resilient sleeve (not shown).

Again a main recess 134 is provided in a second mounting part 132. Only one web 136 is provided extending across the recess 134, and this is provided towards the right hand end as shown in Fig. 6. A web 137 is provided on the inside of the closure 140 so as to be locatable immediately to the left hand side of the web 136 when the closure 140 is closed. The web 137 helps provide secure retension of a swivel 152. The closure 140 has a solid configuration and again a resilient detent 148 engageable in an opening 150 in the body 116.

Various other modifications may be made without departing from the scope of the invention. For instance, a different means of closing the body could be provided. The mounting parts could be differently shaped.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A fishing accessory, the accessory (10, 110) including a first mounting part (24, 124) to which a weight (12) can be mounted, and a second mounting part (32, 132) which can locate a line connecting member (52, 152) for connecting two lengths of fishing line (62), **characterised in that** the second mounting part is selectively movable between a first condition in which the connecting member (52, 152) is restrainably located, and a second position in which the connecting member (52, 152) can be located on the second mounting part (32, 132) or removed therefrom.

2. An accessory according to claim 1, **characterised in that** the first mounting part (24, 124) is arranged such that a weight (12) can be pulled thereof in one direction, and may be arranged such that said first mounting part (24, 124) has to be resiliently deformed for a weight (12) to be pulled off in said one direction.

3. An accessory according to claims 1 or 2, **characterised in that** the accessory (10, 110) includes a body (16, 116) which provides the first and second mounting parts (24, 124, 32, 132).

4. An accessory according to claim 3, **characterised in that** the first mounting part (24) comprises a projection member (24, 124) extending from the body (16, 116) in a generally parallel alignment thereto.

5. An accessory according to claim 4, **characterised in that** the projection member (24, 124) extends upwardly in normal use, and may include a locating part (30) towards the closed end of the projection where a weight or mounting part for a weight can freely locate.

6. An accessory according to claims 4 or 5, **characterised in that** the free end of the projection member (24, 124) is arranged so as to require resilient deformation to permit a weight or a mounting part for a weight to pass thereby, when moving to or from the locating part (30).

7. An accessory according to any of the preceding claims, **characterised in that** a resilient sleeve (68) is provided selectively locatable over the part of the body which includes the first mounting part (24, 124).

8. An accessory according to any of the preceding claims, **characterised in that** the body (16, 116) includes a longitudinal passage through which a fishing line (62) can extend.

9. An accessory according to any of the preceding claims, **characterised in that** the second mounting part (32, 132) comprises a main recess (34, 134) defining means which can accept the line connecting member (52, 152), and a closure (40, 140) for the main recess (34, 134).

10. An accessory according to claim 9, **characterised in that** the closure (40, 140) is pivotally mounted relative to the main recess (34, 134), sprung detent means (48, 148) may be provided for retaining the closure (40, 140) in a closed position, the detent means (48, 148) may be provided on the closure (40, 140) with a corresponding opening (50, 150) in the main recess defining means, or vice versa.

11. An accessory according to claims 9 or 10, **characterised in that** the main recess defining means (34, 134) is configured to hold a line connecting means in the form of a swivel (52, 152).

12. An accessory according to claim 11, **characterised in that** the recess defining means (34, 134) defines a mounting recess (38) for receiving a portion of a swivel (52, 152) to the side of a central section (54), such that the central section (54) and hence whole of the swivel (52, 152) is restrained in the main recess, and a pair of mounting recesses (38) may be provided for respectively receiving portions of the swivel (52, 152) either side of the central section (54).
